# EUROPEAN PATENT APPLICATION

(11) **EP 4 722 101 A1**
(43) Date of publication of application: **08.04.2026**
(21) Application number: 25197135.4
(22) Date of filing: 20.08.2025
(51) Int. Cl.: B64C 3/56

(54) **WING TIP MECHANISM**

(30) Priority: 07.10.2024 GB 202414707
(71) Applicant: Airbus Operations Limited, Bristol BS34 7PA (GB)
(72) Inventor: KIRK, James Graham, Bristol, BS34 7PA (GB)
(74) Representative: Abel & Imray LLP

(57) **Abstract**

The invention provides an aircraft wing (100) with a wing tip device (14) movable between a flight configuration for use during flight and a ground configuration for use during ground-based operations. In the ground configuration the wing tip device (14) is moved away from the flight configuration such that the span of the aircraft wing is reduced. A hinge arrangement (16) connects the fixed wing and the wing tip device. The hinge arrangement comprises a plurality of fixed wing interface rings (40), a plurality of wing tip device interface rings (41), and a geared rotary actuator (38, GRA) partially located within the fixed wing interface rings and wing tip device interface rings. The GRA is arranged to drive the wing tip device interface rings to move the wing tip device between the flight configuration and ground configuration.

## Description

### BACKGROUND OF THE INVENTION

There is a trend towards increasingly large passenger aircraft, for which it is desirable to have correspondingly large wing spans. However, the maximum aircraft span is effectively limited by airport operating rules which govern various clearances required when manoeuvring around the airport (such as the span and/or ground clearance required for gate entry and safe taxiway usage).

Therefore, folding wing tip devices have been introduced into passenger aircraft, where a wing tip device is movable between a flight configuration for use during flight, and a ground configuration for use during ground-based operations. In the ground configuration, the wing tip device is moved away from the flight configuration such that the span of the aircraft wing is reduced, thereby allowing use of existing gates and safe taxiway usage.

The folding wing tip device may be connected to a fixed wing via a hinge arrangement. Often the hinge arrangement comprises a series of interleaved lugs surrounding the hinge and acting as attachment points to either the fixed wing or the wing tip device. The hinge arrangement, including the lugs, may protrude beyond the wing skin of the fixed wing and wing tip device, resulting in a need for a fairing to cover the exposed section of the hinge arrangement in order that the aerodynamic performance of the wing is not adversely affected. In order to avoid the hinge arrangement, potentially including interleaved lugs, from fouling the fairing in movement from the flight configuration to ground configuration, typical known hinge devices protrude beyond the wing skin of the fixed wing and wing tip device a reasonably significant amount, and as a result the size of the fairings, as presented to the airflow around the aircraft, may be large. The increased fairing size may create additional drag on the aircraft, potentially reducing fuel efficiency.

The present invention seeks to mitigate the above-mentioned problems. Alternatively or additionally, the present invention seeks to provide an improved hinge arrangement.

### SUMMARY OF THE INVENTION

The present invention provides, according to a first aspect, an aircraft wing, the aircraft wing comprising a fixed wing and a wing tip device at the tip thereof, wherein the wing tip device is configurable between: (i) a flight configuration for use during flight and (ii) a ground configuration for use during ground-based operations, in which ground configuration the wing tip device is moved away from the flight configuration such that the span of the aircraft wing is reduced, the aircraft wing further comprising a hinge arrangement connecting the fixed wing and the wing tip device, wherein the hinge arrangement comprises a fixed wing interface ring, a wing tip device interface ring, and a geared rotary actuator (GRA) partially located within the fixed wing interface ring and wing tip device interface ring, and arranged to drive the wing tip device interface ring to move the wing tip device between the flight configuration and ground configuration.

The hinge arrangement may provide a hinge axis around with the wing tip device is rotated between the flight configuration and ground configuration. The hinge axis may be aligned with the line of flight direction, or angled relative to the line of flight direction up to 15 degrees. The geared rotary actuator may comprise a fixed GRA ring and a rotatable GRA ring, the rotatable GRA ring drivable by the geared rotary actuator to rotate relative to the fixed GRA ring, and the fixed wing interface ring may be mechanically engaged with the fixed GRA ring and the wing tip device interface ring may be mechanically engaged with the rotatable GRA ring, such that the geared rotary actuator moves the wing tip device between the flight configuration and ground configuration by driving rotational movement of the rotatable GRA ring relative to the fixed GRA ring.

The invention allows the fixed wing and wing tip device to be coupled to one another via engagement with the geared rotary actuator, the geared rotary actuator being located partially within the respective interface rings. Such an arrangement may be particularly space efficient, and the respective interface rings may extend only a small amount outside the dimensions of the geared rotary actuator. Such an arrangement may allow for the provision of a smaller fairing to cover the hinge arrangement, or potentially no fairing may be necessary. In such an arrangement, the reduced size, or absence, of the fairing, may reduce the drag created by the hinge arrangement during flight compared to larger fairings.

The skilled persons will appreciate that the terms fixed and rotatable are used relative to the movement of those elements during operation of the geared rotary actuator. For example, the fixed GRA ring is mechanically coupled to the fixed wing interface ring, and the fixed wing does not move when the wing tip device is moved between the flight configuration and ground configuration. The rotatable GRA ring is mechanically coupled to the wing tip device interface ring, and the wing tip device does move when the wing tip device is moved between the flight configuration and ground configuration.

The fixed wing interface ring may comprise a splined or toothed inner surface, and the fixed GRA ring may comprise a corresponding splined or toothed outer surface, via which the fixed wing interface ring and fixed GRA ring are mechanically coupled. The mechanical coupling is arranged to transmit rotational forces from the fixed GRA ring to the fixed wing interface ring.

The wing tip device interface ring may comprise a splined or toothed inner surface, and the rotatable GRA ring may comprise a corresponding splined or toothed outer surface, via which the wing tip device interface ring and fixed GRA ring are mechanically coupled. The mechanical coupling is arranged to transmit rotational forces from the fixed GRA ring to the fixed wing interface ring.

The splined or toothed inner surface the fixed wing interface ring and the wing tip device interface ring may be the same surface profile, such that the geared rotary actuator can easily be inserted into position. The fixed GRA ring and rotatable GRA ring may comprise the same surface profile to allow straightforward engagement with the fixed wing interface ring and wing tip device interface ring.

Other profiles may be provided which transmit the rotational forces between the geared rotary actuator, the fixed wing, and wing tip device, as will be appreciated by a skilled person. For example, the fixed wing interface ring or wing tip device interface ring may comprise a simple polygon profile, with the fixed GRA ring or rotatable GRA ring a corresponding simple polygon profile. The simple polygon profile may have any of 3, 4, 5, 6 or more sides.

The fixed wing interface ring may comprise a wing box interface, the wing box interface enabling mechanical coupling of the fixed wing interface ring to the wing box of the fixed wing. The wing tip device interface ring may comprise a wing box interface enabling mechanical coupling of the wing tip device interface ring to the wing box of the wing tip device. The mechanical coupling may be via rivets, bolts, or any conventional fixing mechanisms as would be well understood by the skilled person. Such an arrangement allows the fixed wing interface ring and wing tip device interface ring to be manufactured and provided separately to the rest of the fixed wing and wing tip device. Such an arrangement may allow easier maintenance or replacement of the various components making up the aircraft wing.

The hinge arrangement may comprise a plurality of fixed wing interface rings mechanically coupled to corresponding fixed GRA rings.

The hinge arrangement may comprise a plurality of wing tip device interface rings mechanically coupled to corresponding rotatable GRA rings.

The hinge arrangement may comprise a plurality of fixed wing interface rings mechanically coupled to corresponding fixed GRA rings, interleaved between a plurality of wing tip device interface rings mechanically coupled to corresponding rotatable GRA rings. The number of fixed wing interface rings and wing tip device interface rings may be the same, or may be different.

The geared rotary actuator may be slid into position within the fixed wing interface ring(s) and wing tip device interface ring(s) during construction of the aircraft wing. Such an arrangement advantageously allows the geared rotary actuator to be supplied separately to the fixed wing interface rings and wing tip device interface rings. Such an arrangement may also allow for the maintenance and/or replacement of the geared rotary actuator by allowing removal of the geared rotary actuator from the aircraft ring. The hinge arrangement may comprise one or more retaining pins or rings to hold the geared rotary actuator in position once the wing has been put together. The one or more retaining pins or rings may be non-load bearing during flight.

The hinge arrangement may comprise one or more locking pins to lock the fixed wing and wing tip device to one another. The locking pins may be used to lock the wing tip device in a flight, ground, or intermediate position. The one or more locking pins may be positioned such that, when in a flight or intermediate position, flight loads are directly transmitted between the fixed wing interface ring and wing tip device interface ring. Alternatively, flight loads may be transmitted to the geared rotary actuator.

According to a second aspect of the invention, there is provided an aircraft comprising an aircraft wing according to the first aspect of the invention.

According to a third aspect, there is provide a hinge arrangement for connecting a fixed wing and a wing tip device, wherein the hinge arrangement comprises a fixed wing interface ring, a wing tip device interface ring, and a geared rotary actuator (GRA) partially located within the fixed wing interface ring and wing tip device interface ring, and arranged to drive the wing tip device interface ring to move the wing tip device between the flight configuration and ground configuration.

According to a fourth aspect, there is provided a geared rotary actuator comprising a fixed GRA ring and a rotatable GRA ring, the actuator configured to drive rotational movement between the fixed GRA ring and rotatable GRA ring, both the fixed GRA ring and rotatable GRA ring comprising a splined or toothed outer surface.

According to a fifth aspect, there is provide an interface ring for a hinge arrangement according to the third aspect of the invention, the interface ring comprising a splined or toothed inner ring surface, and a wing box interface configured for connection to a wing box of a fixed wing or wing tip device.

The aircraft may be a passenger aircraft. The passenger aircraft preferably comprises a passenger cabin comprising a plurality of rows and columns of seat units for accommodating a multiplicity of passengers. The aircraft may have a capacity of at least 20, more preferably at least 50 passengers, and optionally more than 75 passengers. The aircraft may be a commercial aircraft, for example a commercial passenger aircraft, for example a single aisle or twin aisle aircraft. The aircraft need not be configured for carrying passengers, but could for example be an aircraft of an equivalent size configured for cargo and/or used on a non-commercial basis. The aircraft may have a maximum take-off weight (MTOW) of at least 20 tonnes, optionally at least 40 tonnes, and possibly 50 tonnes or more. The aircraft may have an operating empty weight of at least 20 tonnes, optionally at least 30 tonnes, and possibly about 40 tonnes or more.

It will of course be appreciated that features described in relation to one aspect of the present invention may be incorporated into other aspects of the present invention. For example, the method of the invention may incorporate any of the features described with reference to the apparatus of the invention and *vice versa.*

### DESCRIPTION OF THE DRAWINGS

Embodiments of the present invention will now be described by way of example only with reference to the accompanying schematic drawings of which:
Figure 1a shows an aircraft wing according to a first embodiment of the invention;
Figure 1b shows an aircraft comprising an aircraft wing according to a first embodiment of the invention;
Figures 2a, 2b, and 2c show a prior art wing tip mechanism;
Figure 3 shows a cross-sectional view of a hinge mechanism according to the invention;
Figure 4 show components parts of the hinge mechanism shown in figure 3;
Figure 5 shows a plan view of the rings of a geared rotary actuator according to an embodiment of the invention

### DETAILED DESCRIPTION

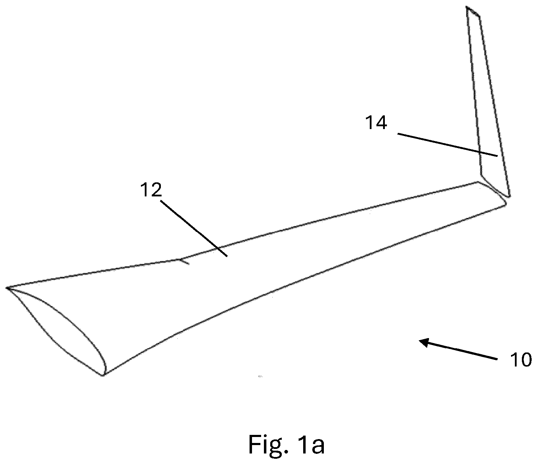

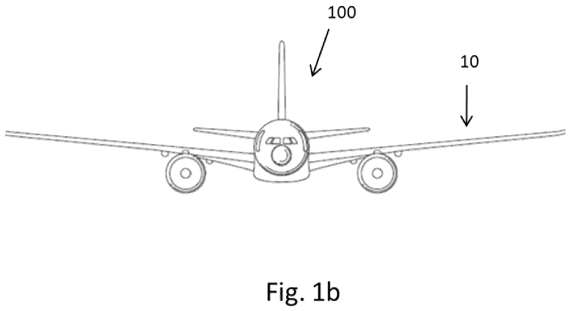

Figures 1a and 1b show an aircraft wing 100 with an aircraft wing 10 comprising a fixed wing 12 and a wing tip device 14 movable between a flight configuration, and a ground configuration with a reduced wing span.

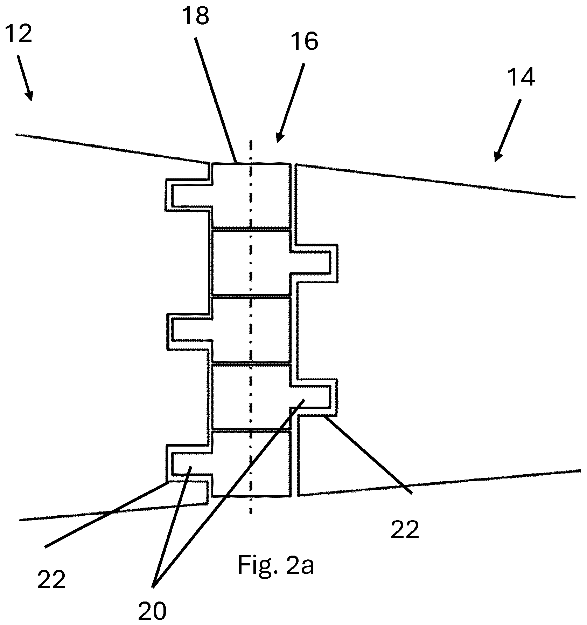

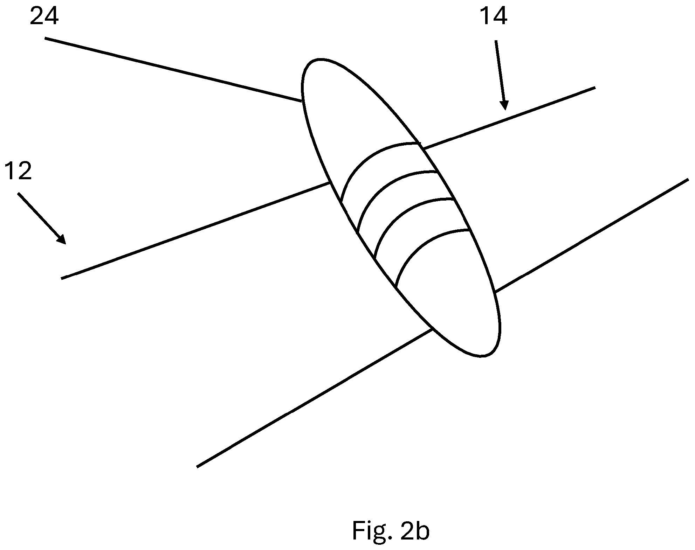

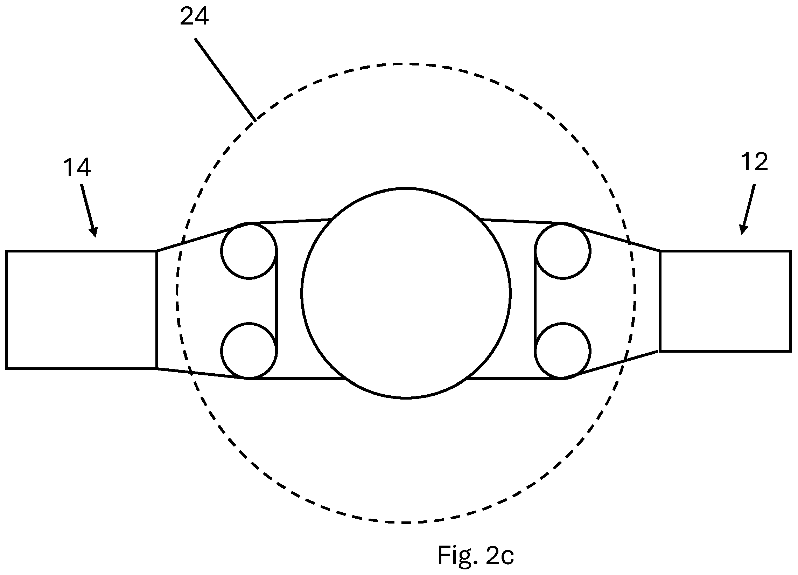

Figures 2a, b, and c show various view of a prior art wing tip mechanism and associated fairing. The wing tip mechanism comprises a hinge arrangement 16, with a hinge axis X-X around which a wing tip device 14 may be rotated between the flight configuration and ground configuration. As can be seen in the figures, the hinge axis is oriented in the line of flight direction. The hinge arrangement 16 comprises a geared rotary actuator 18 with a plurality of lugs 20 extending from the geared rotary actuator 18 which are bolted to corresponding lugs 22 on the fixed wing 12 and the wing tip device 14. The lugs 20 and 22 rotationally couple the geared rotary actuator 18 to the fixed wing 12 and wing tip device 14, such that activation of the geared rotary actuator 18 drives the wing tip device 14 between the flight configuration and ground configuration. As shown in figure 2b, to provide a more aerodynamic wing surface, a fairing 24 is positioned over the hinge arrangement 16. In order to accommodate the movement of the lugs 20 and 22, the fairing is relatively large, with the size of the fairing in part determined by the extension of the lugs 20 and 22 away from the centre of the geared rotary actuator 18.

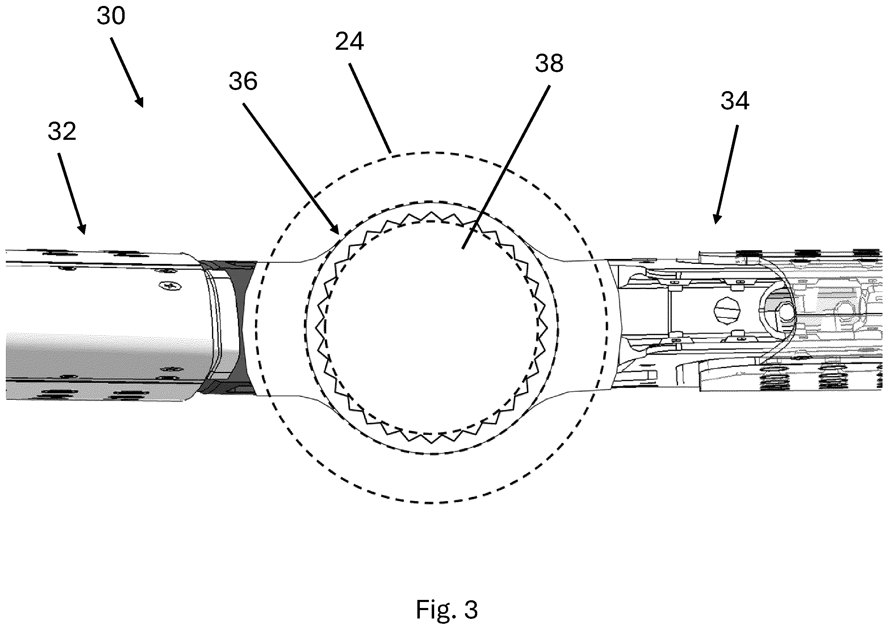

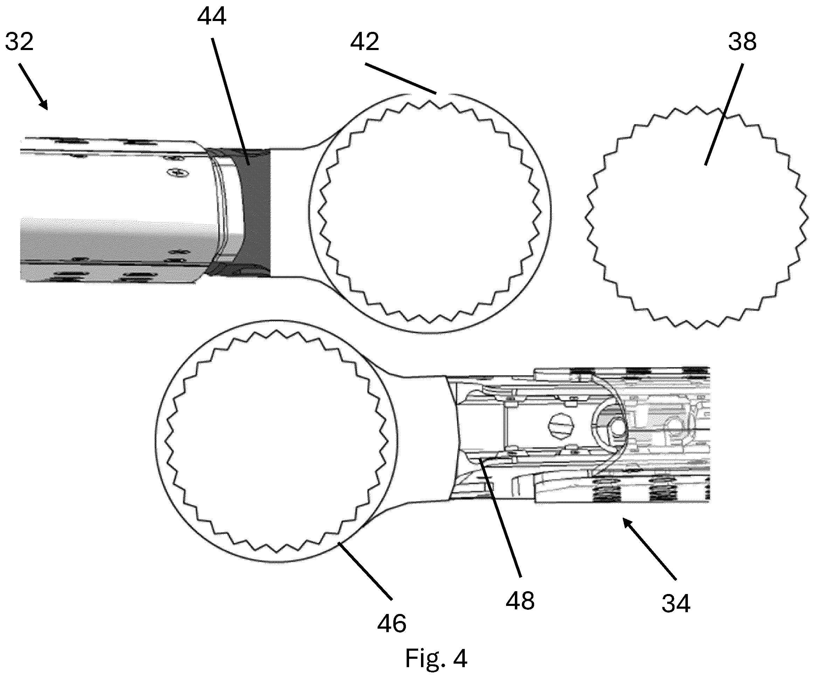

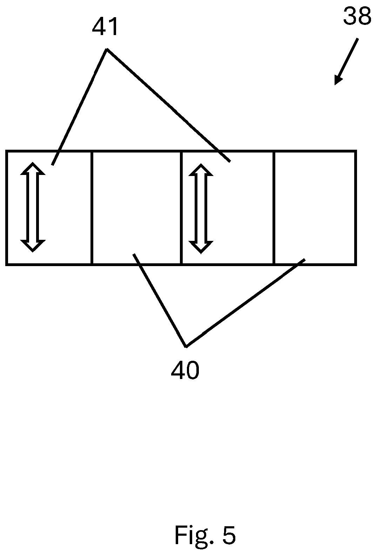

Figures 3 and 4, show a cross-sectional view of an aircraft wing 30 according to an embodiment of the invention. The aircraft wing comprises a fixed wing 32 and a wing tip device 34 movable between a flight configuration and a ground configuration with a reduced wing span, in figure 3 being shown in the flight configuration. The wing tip device 34 is movable between the flight configuration and ground configuration by rotation around a hinge arrangement 36. As in figure 2A, the hinge arrangement has a hinge axis oriented in the line of flight direction, but the skilled person will appreciate that in alternative embodiments the hinge axis may be at an angle, for example up to 15 degrees, to the line of flight direction. The hinge arrangement comprises a geared rotary actuator 38, the geared rotary actuator 38 comprising conventional geared rotary actuator drive mechanism (not shown), a plurality of fixed GRA rings 40, and a plurality of rotatable GRA rings 41 interleaved between the plurality of fixed GRA rings 40. The drive mechanism of the geared rotary actuator 38 is configured to drive the rotatable GRA rings 41 relative to the fixed GRA rings 40. Figure 5 shows a plan view of the plurality of GRA rings as described.

The fixed wing 32 is attached to a fixed wing interface ring 42 via a wing box interface 44. The wing box interface 44 allows the fixed wing interface ring 42 to be supplied separately to the fixed wing 32 and joined to the fixed wing 32 during construction of the wing 30. In addition to advantages during construction of the wing 30, such an arrangement may also be advantageous if maintenance or replacement operations are required.

The wing tip device 34 is attached to a wing tip device interface ring 46 via a wing tip device wing box interface 48. As above, this allows the wing tip device interface ring 46 to be supplied separately to the wing tip device 34, with possible construction, maintenance, and/or replacement advantages.

The wing box interfaces 44, 48 may be mechanically secured to the fixed wing and wing tip device by any suitable fixing means as would be understood by a skilled person, such as rivets, bolts, welding, or other means.

The fixed GRA rings 40 and rotatable GRA rings 41 of the geared rotary actuator 38 have a splined outer surface. The fixed wing interface ring 42 and wing tip device interface ring 46 have a corresponding splined inner surface. The fixed wing interface ring 42 and the wing tip device interface ring 46 are held in alignment with one another during construction, and the geared rotary actuator 38 slid through the respective rings, such that a fixed GRA ring 40 aligns with and is rotatably engaged with a fixed wing interface ring 42, and a rotatable GRA ring 42. One or more pins may be positioned to prevent further translational movement of the geared rotary actuator with respect to the fixed wing interface ring 42 and wing tip device interface ring 46. Also, the skilled person will appreciate that whilst only a single fixed wing interface ring 42, and single wing tip device interface ring has been described, a plurality of either or both rings may be provided, with corresponding fixed and rotatably GRA rings provided on the geared rotary actuator 38 as shown in figure 5.

As best shown in figure 4, the profile of the hinge arrangement according to the present invention is significantly reduced compared to that of the prior art shown in figures 2a, 2b, and 2c. The use of splined rings to interface with the geared rotary actuator results in the possibility of using a fairing, shown by the dotted lines 48, which has a much smaller cross-sectional area than the fairing 24, which is also shown in dotted lines on figure 4, and needs to accommodate the lugs which connect to the geared rotary actuator of the prior art.

Whilst the present invention has been described and illustrated with reference to particular embodiments, it will be appreciated by those of ordinary skill in the art that the invention lends itself to many different variations not specifically illustrated herein. By way of example only, certain possible variations will now be described. One or more locking pins may also be provided to lock the GRA rings to one another, thus preventing rotational movement of the rotatable GRA rings relative to the fixed GRA rings, and ultimately locking the wing tip device 34 in position. Alternatively or additionally, one or more locking pins may be provided to lock the fixed wing interface ring 42 to the wing tip device interface ring 46, thus locking the wing tip device 34 in position. The wing tip device may therefore be locked in a flight configuration, ground configuration, or an intermediate configuration.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

The term 'or' shall be interpreted as 'and/or' unless the context requires otherwise.

## Claims

1. An aircraft wing, the aircraft wing comprising a fixed wing and a wing tip device at the tip thereof, wherein the wing tip device is configurable between: (i) a flight configuration for use during flight and (ii) a ground configuration for use during ground-based operations, in which ground configuration the wing tip device is moved away from the flight configuration such that the span of the aircraft wing is reduced, the aircraft wing further comprising
a hinge arrangement connecting the fixed wing and the wing tip device, wherein the hinge arrangement comprises
a plurality of fixed wing interface rings,
a plurality of wing tip device interface rings, and
a geared rotary actuator (GRA) partially located within the fixed wing interface rings and wing tip device interface rings, and arranged to drive the wing tip device interface rings to move the wing tip device between the flight configuration and ground configuration.

2. An aircraft wing as claimed in claim 1, wherein the geared rotary actuator comprises a plurality of fixed GRA rings and a plurality of rotatable GRA rings, the rotatable GRA rings drivable by the geared rotary actuator to rotate relative to the fixed GRA rings, and
the fixed wing interface rings are mechanically engaged with the fixed GRA rings and the wing tip device interface rings are mechanically engaged with the rotatable GRA rings, such that the geared rotary actuator moves the wing tip device between the flight configuration and ground configuration by driving rotational movement of the rotatable GRA rings relative to the fixed GRA rings.

3. An aircraft wing as claimed in claim 2, wherein the fixed wing interface rings comprise a splined or toothed inner surface, and the fixed GRA rings comprise a corresponding splined or toothed outer surface, via which the fixed wing interface ring and fixed GRA ring are mechanically coupled.

4. An aircraft wing as claimed in claim 2 or 3, wherein the wing tip device interface rings comprise a splined or toothed inner surface, and the rotatable GRA rings comprise a corresponding splined or toothed outer surface, via which the wing tip device interface rings and fixed GRA rings are mechanically coupled.

5. An aircraft wing as claimed in claim 2, wherein the fixed wing interface rings or wing tip device interface rings comprise a simple polygon profile, with the fixed GRA rings or rotatable GRA rings a corresponding simple polygon profile, and the simple polygon profile has any of 3, 4, 5, 6 or more sides.

6. An aircraft wing as claimed in any preceding claim, wherein the fixed wing interface rings comprise a wing box interface, the wing box interface enabling mechanical coupling of the fixed wing interface rings to the wing box of the fixed wing.

7. An aircraft wing as claimed in any preceding claim, wherein the wing tip device interface rings comprise a wing box interface enabling mechanical coupling of the wing tip device interface rings to the wing box of the wing tip device.

8. An aircraft wing as claimed in any of claims 2 to 7, wherein the hinge arrangement comprises a plurality of fixed wing interface rings mechanically coupled to corresponding fixed GRA rings, interleaved between a plurality of wing tip device interface rings mechanically coupled to corresponding rotatable GRA rings.

9. An aircraft wing as claimed in any preceding claim, wherein the hinge arrangement comprises one or more retaining pins or rings to hold the geared rotary actuator in position once the wing has been put together.

10. An aircraft comprising an aircraft wing as claimed in any of claims 1 to 9.

11. A hinge arrangement for connecting a fixed wing and a wing tip device, wherein the hinge arrangement comprises
a plurality of fixed wing interface rings,
a plurality of wing tip device interface rings, and
a geared rotary actuator (GRA) partially located within the fixed wing interface rings and wing tip device interface rings, and arranged to drive the wing tip device interface rings to move the wing tip device between the flight configuration and ground configuration.

12. A geared rotary actuator comprising a fixed GRA ring and a rotatable GRA ring, the actuator configured to drive rotational movement between the fixed GRA ring and rotatable GRA ring, both the fixed GRA ring and rotatable GRA ring comprising a splined or toothed outer surface.

13. An interface ring for a hinge arrangement as claimed in claim 11, the interface ring comprising a splined or toothed inner ring surface, and a wing box interface configured for connection to a wing box of a fixed wing or wing tip device.
